# EUROPEAN PATENT APPLICATION

(11) **EP 4 082 973 A1**
(43) Date of publication of application: **02.11.2022**
(21) Application number: 20907666.0
(22) Date of filing: 08.12.2020
(51) Int. Cl.: C01G 53/00, H01M 10/54

(54) **METHOD FOR RECOVERING POSITIVE ELECTRODE ACTIVE MATERIAL PRECURSOR**

(30) Priority: 26.12.2019 KR 20190175438
(71) Applicant: SK Innovation Co., Ltd., Seoul 03188 (KR)
(72) Inventor: KIM, Myoung Lae, Daejeon 34124 (KR); PARK, Ji Yun, Daejeon 34124 (KR); LEE, Hyeon Hui, Daejeon 34124 (KR)
(74) Representative: Behr, Wolfgang
(86) International application number: PCT/KR2020/017857
(87) International publication number: WO 2021/132946

(57) **Abstract**

A method for recovering a positive electrode active material precursor according to embodiments of the present invention comprises the steps of: preparing a positive electrode active material mixture comprising a lithium composite oxide; separating lithium from the positive electrode active material mixture to form a preliminary transition metal precursor; treating the preliminary transition metal precursor with an acid to form a composite transition metal salt solution; and mixing the composite transition metal salt solution with an acidic extractant and then adding a basic compound thereto to recover a composite transition metal precursor, and thus the extraction rate of transition metals can be improved.

## Description

### TECHNICAL FIELD

The present invention relates to a method of recovering a cathode active material precursor. More particularly, the present invention relates to a method of recovering a cathode active material precursor from a cathode active material mixture.

### BACKGROUND ART

A secondary battery which can be charged and discharged repeatedly has been widely employed as a power source of a mobile electronic device such as a camcorder, a mobile phone, a laptop computer, etc., according to developments of information and display technologies. The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

The lithium secondary battery may include an electrode assembly including a cathode, an anode, a separation layer (separator), and an electrolyte immersing the electrode assembly. The lithium secondary battery may further include an outer case having, e.g., a pouch shape for housing the electrode assembly and the electrolyte.

A lithium composite oxide may be used as a cathode active material of the lithium secondary battery. The lithium composite oxide may additionally contain a transition metal such as nickel, cobalt, manganese, etc.

The lithium composite oxide as the cathode active material may be prepared by reacting a lithium precursor and a nickel-cobalt-manganese (NCM) precursor containing nickel, cobalt and manganese.

As the above-mentioned high-cost valuable metals are used for the cathode active material, 20% or more of a production manufacturing cost is required for manufacturing the cathode material. Additionally, as environment protection issues have recently been highlighted, a recycling method of the cathode active material is being researched. For the recycling of the cathode active material, regeneration of the lithium precursor from a waste cathode is required with high efficiency and high purity.

For example, Korean Published Patent Application No. 2015-0002963 discloses a method for recovering lithium using a wet method. However, lithium is recovered by a wet extraction from a waste liquid remaining after extraction of cobalt, nickel, etc., and thus a recovery ratio is excessively reduced and a large amount of impurities may be generated from the waste liquid.

### DETAILED DECRIPTIONS OF THE INVENTION

### [Technical Objective]

According to an aspect of the present invention, there is provided a method of recovering a cathode active material precursor from a cathode active material mixture with high purity, high yield and high efficiency.

### [Technical Means]

A method of recovering a cathode active material precursor according to exemplary embodiments of the present invention includes preparing a cathode active material mixture including a lithium composite oxide; separating lithium from the cathode active material mixture to form a preliminary transition metal precursor; acid-treating the preliminary transition metal precursor to form a complex transition metal salt solution; and adding an acidic extractant to the complex transition metal salt solution and then adding a basic compound to recover a transition metal precursor.

In some embodiments, the forming the preliminary transition metal precursor may include hydrogen-reducing the cathode active material mixture to form a preliminary precursor mixture, and washing the preliminary precursor mixture with water to separate lithium.

In some embodiments, the forming the complex transition metal salt solution may include acid-treating the preliminary transition metal precursor so that a pH of the complex transition metal salt solution may be from 0.1 to 2.0.

In some embodiments, the forming the complex transition metal salt solution may include acid-treating the preliminary transition metal precursor using sulfuric acid.

In some embodiments, the complex transition metal salt solution may contain a sulfate of a transition metal complex including at least two transition metals selected from the group consisting of nickel, cobalt and manganese.

In some embodiments, wherein the acidic extractant may include at least one selected from the group consisting of a phosphoric acid-based extractant, a phosphate-based extractant and a phosphine oxide-based extractant.

In some embodiments, the acidic extractant may further include a diluent.

In some embodiments, the diluent may include at least one selected from the group consisting of kerosene, hexane, benzene and toluene.

In some embodiments, the recovering the transition metal precursor may include mixing the complex transition metal salt solution and the acidic extractant so that an organic phase/aqueous phase ratio may be from 2 to 10.

In some embodiments, the recovering the transition metal precursor may include adding the basic compound to a mixture of the complex transition metal salt solution and the acidic extractant so that an equilibrium pH may be from 3.5 to 6.

In some embodiments, the basic compound may include at least one selected from the group consisting of lithium hydroxide, sodium hydroxide and potassium hydroxide.

### [Effects of the Invention]

According to exemplary embodiments of the present invention, a preliminary transition metal precursor from which a lithium precursor is separated from a cathode active material mixture may be acid-treated, and then a high-purity transition metal precursor may be obtained in high yield and high efficiency using an acidic extractant and a basic compound.

The transition metal precursor may be recovered after separating the lithium precursor from the cathode active material mixture, so that the transition metal precursor may be extracted at a high equilibrium pH. Accordingly, a recovery ratio of a transition metal (e.g., nickel) may be improved.

Additionally, transition metal may not be individually extracted, but may be extracted in a single batch in the form of a composite transition metal precursor. Accordingly, an extraction efficiency may be improved.

### [Embodiments for Practicing the Invention]

According to exemplary embodiments of the present invention, a transition metal precursor may be recovered using an acidic extractant and a basic compound after separating a lithium precursor from the cathode active material mixture in advance, and thus the cathode active material precursor may be recovered with high yield and high efficiency.

The term "precursor" in the present application is used to comprehensively refer to a compound including a specific metal to provide the specific metal included in an electrode active material.

In a method of recovering a cathode active material precursor according to some embodiments, a cathode active material mixture including a lithium composite oxide may be prepared.

In exemplary embodiments, the cathode active material mixture may be obtained from a waste lithium secondary battery. The waste lithium secondary battery may include a lithium secondary battery that may not be reused (charge/discharge) substantially. For example, the waste lithium secondary battery may be a lithium secondary battery from which a charge/discharge efficiency is greatly reduced due to a termination of a life-span, or a lithium secondary battery destroyed by a shock or a chemical reaction.

The waste lithium secondary battery may include, e.g., an electrode assembly including a cathode, an anode and a separation layer interposed between the cathode and the anode. For example, the cathode and the anode may include a cathode active material layer and an anode active material layer coated on the cathode current collector and the anode current collector, respectively.

For example, the cathode active material included in the cathode active material layer may include an oxide containing lithium and a transition metal.

In some embodiments, the cathode active material may be an NCM-based lithium oxide including nickel, cobalt and manganese. However, embodiments of the present invention may be commonly applied to a cathode material including the NCM-based lithium oxide and a lithium-containing cathode material.

For example, a waste cathode may be recovered by separating the cathode from the waste lithium secondary battery. The cathode may include the cathode current collector (e.g., aluminum (Al)) and the cathode active material layer as described above, and the cathode active material layer may include a conductive material and a binder together with the above-described cathode active material.

The conductive material may include, e.g., a carbon-based material such as graphite, carbon black, graphene, carbon nanotube, etc. The binder may include a resin material, e.g., vinylidenefluoride-hexafluoropropylene copolymer (PVDF-co-HFP), polyvinylidenefluoride (PVDF), polyacrylonitrile, polymethylmethacrylate, etc.

For example, the cathode active material mixture may be prepared from the recovered cathode. The term "cathode active material mixture" as used herein refers to a mixture in which a cathode current collector component such as aluminum is substantially completely separated and removed from the recovered cathode, and a content of carbon-based components derived from the conductive material and the binder is removed or reduced.

In some embodiments, the cathode active material mixture may be obtained in the form of a powder by a physical treatment such as pulverization treatment of the recovered cathode. As described above, the cathode active material mixture may include a lithium-transition metal oxide powder, e.g., an NCM-based lithium oxide powder (e.g., Li(NCM)O₂).

In some embodiments, the recovered cathode may be heat-treated before the pulverization treatment. Accordingly, during the pulverization treatment, detachment of the cathode current collector may be facilitated, and the binder and the conductive material may be at least partially removed. A temperature of the heat treatment may be, e.g., from about 100 to 500 °C, preferably from about 350 to 450 °C.

In some embodiments, the cathode active material mixture may be obtained after immersing the recovered cathode in an organic solvent. For example, the recovered cathode may be immersed in an organic solvent to separate and remove the cathode current collector, and the cathode active material mixture may be selectively extracted through a centrifugation.

Through the above-described processes, the cathode active material mixture from which the contents of the cathode current collector component and the carbon-based component derived from the conductive material and/or the binder are substantially removed or reduced may be achieved.

The cathode active material mixture may include, e.g., a lithium-containing compound used in a cathode active material of an electrochemical device. For example, a lithium composite oxide may be used as the cathode active material mixture.

For example, the lithium composite oxide may include lithium and a transition metal. The transition metal may include, e.g., nickel, cobalt, manganese, or the like.

In some embodiments, the lithium composite oxide may be represented by Chemical Formula 1 below.

[Chemical Formula 1] LiₓNiₐCo_{b}M_{(1-a-b)}O_{y}

In Chemical Formula 1, M may be selected from the group consisting of Mn, Na, Mg, Ca, Ti, V, Cr, Cu, Zn, Ge, Sr, Ag, Ba, Zr, Nb, Mo, Al, Ga and B, and 0<x≤1.1, 2≤y≤2.02, 0.5≤a≤1, 0≤b≤0.5.

In exemplary embodiments, a lithium composite oxide having a Ni content of 0.5 molar ratio or more may be effectively converted into a lithium composite oxide.

The cathode active material mixture may further include various lithium-containing compounds such as lithium oxide, lithium carbonate, lithium hydroxide as a non-limiting example.

In some embodiments, lithium may be separated from the prepared cathode active material mixture to form a preliminary transition metal precursor. For example, lithium may be separated from the cathode active material mixture in the form of lithium oxide or lithium hydroxide.

In exemplary embodiments, the formation of the preliminary transition metal precursor may include reducing the cathode active material mixture to form a preliminary precursor mixture, and washing the preliminary precursor mixture with water to separate lithium.

For example, a hydrogen reduction treatment of the preliminary cathode active material mixture may be performed to form the preliminary precursor mixture, and then the preliminary precursor mixture may be washed with water to separate a lithium precursor including lithium hydroxide.

In some embodiments, the hydrogen reduction treatment may be performed using a fluidized bed reactor. For example, the cathode active material mixture may be introduced into the fluidized bed reactor and a hydrogen gas may be injected from a bottom portion of the fluidized bed reactor.

A cyclone may be formed from the bottom portion of the fluidized bed reactor by the hydrogen gas, and the preliminary precursor mixture may be generated while the cathode active material mixture and hydrogen contact each other.

In some embodiments, a carrier gas and the hydrogen gas may be mixed and injected at the bottom portion of the fluidized bed reactor. Accordingly, a gas-solid mixing may be promoted to enhance a reaction in a fluidized bed, and a reaction layer of the preliminary precursor mixture in the fluidized bed reactor may be easily formed.

The carrier gas may include, e.g., an inert gas such as nitrogen (N₂) or argon (Ar).

The preliminary precursor mixture may include, e.g., a hydrogen reductive product of a lithium-transition metal oxide included in the cathode active material mixture. If the NCM-based lithium oxide is used as the lithium-transition metal oxide, the preliminary precursor mixture may include a preliminary lithium precursor and a preliminary transition metal precursor.

The preliminary lithium precursor may include lithium hydroxide, lithium oxide and/or lithium carbonate.

A transition metal component of the preliminary transition metal precursor may be derived from the lithium composite oxide in the recovered cathode. For example, in a reaction in which the lithium composite oxide is converted into lithium oxide, the transition metal component may be separated to form the preliminary transition metal precursor. The preliminary transition metal precursor may include, e.g., Ni, Co, NiO, CoO, MnO, or the like.

The hydrogen reductive reaction may be performed at a temperature from about 400 to 700 °C, preferably from about 450 to 550 °C.

The preliminary lithium precursor may be converted into a lithium precursor substantially consisting of lithium hydroxide by the washing treatment. For example, lithium oxide and lithium carbonate mixed in the preliminary lithium precursor may be converted into lithium hydroxide by being reacted with water, or may be removed by the washing treatment. Accordingly, a high-purity lithium precursor converted into a desired lithium hydroxide form may be produced.

The preliminary lithium precursor may be dissolved by being reacted with water to substantially prepare an aqueous lithium hydroxide solution.

The preliminary transition metal precursor included in the preliminary precursor mixture may be precipitated without being dissolved or reacted in water by the washing treatment. Thus, a lithium precursor including the high-purity lithium hydroxide may be obtained and separated from the preliminary transition metal precursor by a filtration.

In some embodiments, the washing treatment may be performed under a condition from which carbon dioxide (CO₂) is excluded. For example, the washing treatment may be performed in a CO₂-free atmosphere (e.g., an air atmosphere from which CO₂ is removed), so that regeneration of lithium carbonate may be prevented.

In an embodiment, water provided during the washing treatment may be purged (e.g., nitrogen purged) using a CO₂ deficient gas to create the CO₂-free atmosphere.

In some embodiments, the preliminary transition metal precursor may be treated with an acid to form a complex transition metal salt solution. For example, the complex transition metal salt solution may be an acid salt solution in which the preliminary transition metal precursor and the acid are reacted, and may include a complex transition metal sulfate solution when sulfuric acid is used.

For example, the complex transition metal salt solution may include nickel, cobalt or manganese. For example, the complex transition metal salt solution may refer to an acid salt solution of a complex of two or more transition metals selected from the group consisting of nickel, cobalt and manganese.

In exemplary embodiments, the acid treatment may be performed for about 60 to 500 minutes by putting the preliminary transition metal precursor in a sulfuric acid solution at a temperature from about 50 to 90 °C. For example, an average pH of the complex transition metal salt solution formed by the acid treatment may be from about 0.1 to 2.0. Within the above ranges of the temperature, the time, and the pH, the complex transition metal salt solution may be more easily formed. Further, an extraction efficiency of the transition metal may be improved.

For example, a solid-liquid ratio of the acid used for acid treatment of the preliminary transition metal precursor may be about 140 g/L or less. More preferably, the solid-liquid ratio may be from about 90 g/L to 130 g/L.

For example, a concentration of the acid used for acid treatment of the preliminary transition metal precursor may be about 1.8 M or more. More preferably, the concentration of the acid may be from about 1.8 M to 10 M.

Within the ranges of the solid-liquid ratio and the acid concentration, the complex transition metal salt solution may be formed without addition of a redox agent. Accordingly, a high-purity transition metal complex may be recovered with high efficiency.

In some embodiments, the complex transition metal precursor may be recovered by adding an acidic extractant to the complex transition metal salt solution, and then adding a basic compound.

In some exemplary embodiments, the acid extractant may include at least one selected from the group consisting of a phosphoric acid-based extractant, a phosphate-based extractant, and a phosphine oxide-based extractant.

For example, the acidic extractant may include at least one selected from the group consisting of di-2-ethylhexyl phosphoric acid, bis(2,4,4-trimethylpentyl) phosphinic acid, bis(2,4,4-trimethylpentyl) dithiophosphinic acid, 2-ethylhexyl phosphoric acid mono-2-ethylhexyl ester, tributyl phosphate and trioctyl phosphine oxide. More preferably, the acidic extractant may include di-2-ethylhexyl phosphoric acid. For example, the acid extractant may improve a ratio of extracting the transition metal (e.g., a transition metal extraction ratio) from the complex transition metal salt solution.

In some exemplary embodiments, the acid extractant may further include a diluent. For example, the diluent may be an organic solvent. For example, the organic solvent may include at least one selected from the group consisting of kerosene, hexane, benzene and toluene. More preferably, the organic solvent may include kerosene.

In some exemplary embodiments, the complex transition metal salt solution and the acid extractant may be mixed so that a ratio of an organic phase to an aqueous phase (organic phase/aqueous phase) is from 2 to 10. More preferably, the complex transition metal salt solution and the acid extractant may be mixed so that the ratio of the organic phase/the aqueous phase is from 3 to 7. For example, within the ratio of the organic phase and the aqueous phase, the organic phase/aqueous phase ratio may be appropriate so that a separation efficiency of the complex transition metal precursor extracted per unit time may be further improved.

In some exemplary embodiments, the basic compound may be added to the mixture so that an equilibrium pH of the mixture of the complex transition metal salt solution and the acidic extractant may be from about 3.5 to 6. For example, lithium has already been separated in the composite transition metal salt solution and a content of lithium is reduced, so that the transition metal extraction may be performed in a relatively high pH range. Accordingly, an extraction ratio for the transition metals, particularly nickel and cobalt, may be improved.

For example, when the equilibrium pH of the mixture of the complex transition metal salt solution and the acidic extractant is less than the above-mentioned equilibrium pH range, the extraction ratio of the transition metal may be degraded.

For example, if the equilibrium pH of the mixture of the complex transition metal salt solution and the acidic extractant exceeds the above-mentioned range, a side reaction such as a metal precipitation may occur. Further, as the average pH of the complex transition metal salt solution increases, a loading amount of the metal in the organic phase may increase, thereby increasing a density and a viscosity of the solution. Accordingly, a fluidity of the organic phase may be reduced due to the high density and high viscosity of the solution, and an efficiency of a phase separation from the aqueous phase may be degraded.

In some exemplary embodiments, the basic compound may include at least one selected from the group consisting of lithium hydroxide, sodium hydroxide and potassium hydroxide.

For example, a percent concentration of the basic compound may be from about 10 to 60%. Within the range of the percent concentration of the basic compound, the equilibrium pH of the mixture of the complex transition metal salt solution and the acidic extractant may be facilitated may be easily adjusted.

In exemplary embodiments, a cathode active material precursor may be prepared, and a transition metal hydroxide may be obtained through an appropriate treatment for the cathode active material precursor, which may be used to prepare a cathode active material.

Hereinafter, preferred embodiments are proposed to more concretely describe the present invention. However, the following examples are only given for illustrating the present invention and those skilled in the related art will obviously understand that these examples do not restrict the appended claims but various alterations and modifications are possible within the scope and spirit of the present invention. Such alterations and modifications are duly included in the appended claims.

### Example 1

1 kg of a cathode material recovered from a waste lithium secondary battery was heat-treated at 450 °C, cut into subunits and pulverized by a milling. The pulverized cathode material was filtered through an 80 µm-mesh sized sieve to remove a cathode current collector component (Al) and carbon-based impurities to obtain a cathode active material mixture.

10 g of the cathode active material mixture was charged in a column-type hydrogen reduction reactor, 20% hydrogen gas was injected, and the mixture was reacted at 450 °C for 2 hours to obtain a preliminary precursor mixture.

The preliminary precursor mixture was reacted with 100 ml of nitrogen-purged water, filtered through a filter paper and a lithium-containing supernatant and a preliminary transition metal precursor-containing precipitate were obtained by a centrifugation.

After removing the lithium-containing supernatant, the preliminary transition metal precursor-containing precipitate was dried. 130 g of the dried precipitate was added to 1 L of 2 mol/L sulfuric acid to form a complex transition metal salt solution. A pH of the obtained complex transition metal salt solution was 0.11.

An acidic extractant containing 1 mol/L of di-2-ethylhexyl phosphoric acid and kerosine was added to the complex transition metal salt solution to form a mixture of the complex transition metal salt solution and the acidic extractant. An organic/aqueous phase ratio of the mixture was 6. Thereafter, sodium hydroxide having a percent concentration of 50% was added to the mixture and an equilibrium pH of the mixture was adjusted to 4.74 to extract a complex transition metal precursor.

### Examples 2 to 8

A complex transition metal precursor was extracted by the same method as that in Example 1, except that the equilibrium pH and the organic phase/aqueous phase ratio of the mixture of the complex transition metal salt solution and the acidic extractant were adjusted as shown in Table 1 below.

### Comparative Example 1

1 kg of a cathode material recovered from a waste lithium secondary battery was heat-treated at 450° C, cut into subunits, and pulverized by a milling. The pulverized cathode material was filtered through an 80 µm-mesh sized sieve to remove a cathode current collector component (Al) and carbon-based impurities to obtain a cathode active material mixture.

200 g of the cathode active material mixture was added to 1 L of 3 mol/L sulfuric acid, and 10 vol% of H₂O₂ having a percent concentration of 35% as a reducing agent was added relative to an amount of sulfuric acid to form a complex transition metal salt solution. A pH of the complex transition metal salt solution was 0.48.

An acidic extractant containing 1 mol/L of di-2-ethylhexyl phosphoric acid and kerosine was added to the complex transition metal salt solution to form a mixture of the complex transition metal salt solution and the acidic extractant. An organic/aqueous phase ratio of the mixture was 6. Thereafter, sodium hydroxide having a percent concentration of 50% was added to the mixture and an equilibrium pH of the mixture was adjusted to 4.7 to extract a complex transition metal precursor.

### Comparative Examples 2 to 4

A complex transition metal precursor was extracted by the same method as that in Comparative Example 1, except that the equilibrium pH and the organic phase/aqueous phase ratio of the mixture of the complex transition metal salt solution and the acidic extractant were adjusted as shown in Table 1 below.

**[Table 1]**

| No. | organic/aqueous phase ratio | equilibrium pH |
|---|---|---|
| Example 1 | 6 | 4.7 |
| Example 2 | 6 | 3.8 |
| Example 3 | 6 | 3.2 |
| Example 4 | 6 | 2.5 |
| Example 5 | 6 | 6.1 |
| Example 6 | 1 | 4.7 |
| Example 7 | 2 | 4.7 |
| Example 8 | 10 | 4.7 |
| Comparative Example 1 | 6 | 4.7 |
| Comparative Example 2 | 6 | 3.6 |
| Comparative Example 3 | 6 | 3.4 |
| Comparative Example 4 | 6 | 2.3 |

### Experimental Example: Calculation of metal extraction ratio

An extraction ratio was calculated by comparing a weight percent of the transition metals present in the aqueous phase before and after the extraction. Weight percents of the transition metals present in the aqueous phase before and after extraction and the extraction rate calculated therefrom are shown in Table 2 below.

**[Table 2]**

| No. | aqueous phase before extraction (wt%) | | | | aqueous phase after extraction (wt%) | | | | extraction ratio (%) | | | |
|---|---|---|---|---|---|---|---|---|---|---|---|---|
| | Mn | Co | Ni | Li | Mn | Co | Ni | Li | Mn | Co | Ni | Li |
| Example 1 | 0.7 | 0.8 | 5.9 | 0.2 | 0.01 | 0.1 | 1.4 | 0.1 | 99 | 87 | 76 | 50 |
| Example 2 | 0.7 | 0.8 | 5.9 | 0.2 | 0.01 | 0.2 | 2.8 | 0.1 | 99 | 75 | 53 | 50 |
| Example 3 | 0.7 | 0.8 | 5.9 | 0.2 | 0.01 | 0.3 | 3.6 | 0.1 | 99 | 62 | 39 | 50 |
| Example 4 | 0.7 | 0.8 | 5.9 | 0.2 | 0.02 | 0.5 | 4.2 | 0.1 | 97 | 38 | 29 | 50 |
| Example 5 | 0.7 | 0.8 | 5.9 | 0.2 | 0.01 | 0.05 | 1.1 | 0.1 | 99 | 94 | 81 | 50 |
| Example 6 | 0.7 | 0.8 | 5.9 | 0.2 | 0.03 | 0.68 | 5.6 | 0.2 | 96 | 15 | 5 | 0 |
| Example 7 | 0.7 | 0.8 | 5.9 | 0.2 | 0.02 | 0.43 | 4.9 | 0.18 | 97 | 46 | 17 | 10 |
| Example 8 | 0.7 | 0.8 | 5.9 | 0.2 | 0.01 | 0.03 | 0.6 | 0.06 | 99 | 96 | 90 | 70 |
| Comparative Example 1 | 0.7 | 0.9 | 6.6 | 1.0 | 0.01 | 0.2 | 2.9 | 0.6 | 99 | 78 | 56 | 40 |
| Comparative Example 2 | 0.7 | 0.9 | 6.6 | 1.0 | 0.01 | 0.3 | 4.1 | 0.6 | 99 | 67 | 38 | 40 |
| Comparative Example 3 | 0.7 | 0.9 | 6.6 | 1.0 | 0.01 | 0.5 | 4.8 | 0.6 | 99 | 44 | 27 | 40 |
| Comparative Example 4 | 0.7 | 0.9 | 6.6 | 1.0 | 0.04 | 0.6 | 4.9 | 0.6 | 94 | 33 | 25 | 40 |

Referring to Table 2 above, as the organic phase/aqueous phase ratio increased, the number of sites in which the metal present in the organic phase could be extracted increased, and thus the extraction ratio of the metal was increased.

Referring to Example 5, when the average pH of the mixture of the complex transition metal salt solution and the acidic extractant exceeded 6.0, an amount of extracted metal increased, thereby increasing a viscosity and a density of the extractant. Accordingly, a separation from the aqueous phase was difficult.

Referring to Table 2, when the organic phase/aqueous phase ratio of the complex transition metal salt solution, the acidic extractant and the basic compound was from 2 to 10, and the equilibrium pH range was from 3.5 to 6, the extraction ratio of the transition metal was further improved.

## Claims

1. A method of recovering a cathode active material precursor, comprising:
preparing a cathode active material mixture including a lithium composite oxide;
separating lithium from the cathode active material mixture to form a preliminary transition metal precursor;
acid-treating the preliminary transition metal precursor to form a complex transition metal salt solution; and
adding an acidic extractant to the complex transition metal salt solution and then adding a basic compound to recover a transition metal precursor.

2. The method of recovering a cathode active material precursor of claim 1, wherein the forming the preliminary transition metal precursor comprises hydrogen-reducing the cathode active material mixture to form a preliminary precursor mixture, and washing the preliminary precursor mixture with water to separate lithium.

3. The method of recovering a cathode active material precursor of claim 1, wherein the forming the complex transition metal salt solution comprises acid-treating the preliminary transition metal precursor so that a pH of the complex transition metal salt solution is from 0.1 to 2.0.

4. The method of recovering a cathode active material precursor of claim 1, wherein the forming the complex transition metal salt solution comprises acid-treating the preliminary transition metal precursor using sulfuric acid.

5. The method of recovering a cathode active material precursor of claim 4, wherein the complex transition metal salt solution contains a sulfate of a transition metal complex including at least two transition metals selected from the group consisting of nickel, cobalt and manganese.

6. The method of recovering a cathode active material precursor of claim 1, wherein the acidic extractant comprises at least one selected from the group consisting of a phosphoric acid-based extractant, a phosphate-based extractant and a phosphine oxide-based extractant.

7. The method of recovering a cathode active material precursor of claim 1, wherein the acidic extractant further comprises a diluent.

8. The method of recovering a cathode active material precursor of claim 7, wherein the diluent comprises at least one selected from the group consisting of kerosene, hexane, benzene and toluene.

9. The method of recovering a cathode active material precursor of claim 1, wherein the recovering the transition metal precursor comprises mixing the complex transition metal salt solution and the acidic extractant so that an organic phase/aqueous phase ratio is from 2 to 10.

10. The method of recovering a cathode active material precursor of claim 1, wherein the recovering the transition metal precursor comprises adding the basic compound to a mixture of the complex transition metal salt solution and the acidic extractant so that an equilibrium pH is from 3.5 to 6.

11. The method of recovering a cathode active material precursor of claim 10, wherein the basic compound comprises at least one selected from the group consisting of lithium hydroxide, sodium hydroxide and potassium hydroxide.
